# EUROPÄISCHE PATENTSCHRIFT

(11) **EP 1 198 750 B1**
(45) Veröffentlichungstag und Bekanntmachung des Hinweises auf die Patenterteilung: **28.12.2005**
(21) Anmeldenummer: 00958122.4
(22) Anmeldetag: 10.07.2000
(51) Int. Cl.: G06F 13/00

(54) **INDUSTRIELLE STEUEREINHEIT MIT USB-ANSCHLÜSSEN**
AN INDUSTRIAL CONTROL UNIT HAVING USB-PORTS
UNITE DE COMMANDE INDUSTRIELLE AVEC USB-CONNECTEURS

(30) Priorität: 28.07.1999 DE 19935512
(43) Veröffentlichungstag der Anmeldung: 24.04.2002
(73) Patentinhaber: SIEMENS AKTIENGESELLSCHAFT, 80333 München (DE)
(72) Erfinder: REINERT, Matthias, D-90562 Kalchreuth (DE); STEINHORST, Thomas, D-90599 Dietenhofen (DE); REBELLIUS, Matthias, D-91056 Erlangen (DE)
(86) Internationale Anmeldenummer: PCT/DE2000/002243
(87) Internationale Veröffentlichungsnummer: WO 2001/009730

(56) Entgegenhaltungen:
- US-A- 5 675 813
- BASSAK G: "USB EASES DATA ACQUISITION" , TEST AND MEASUREMENT WORLD. (INC. ELECTRONICS TEST ),US,CAHNERS PUBLISHING, DENVER, VOL. 18, NR. 6, PAGE(S) 39-40,42,44,47 XP000779484 ISSN: 0744-1657 das ganze Dokument
- ROWE M: "USB PROVES READY FOR T&M TASKS" , TEST AND MEASUREMENT WORLD. (INC. ELECTRONICS TEST ),US,CAHNERS PUBLISHING, DENVER, VOL. 19, NR. 1, PAGE(S) 28-30,32,34,36,38 XP000823410 ISSN: 0744-1657 das ganze Dokument
- SCHULTE W: "USB UNIVERSAL SERIAL BUS" , FUNKSCHAU,DE,FRANZIS-VERLAG K.G. MUNCHEN, VOL. 71, NR. 7, PAGE(S) 60-63 XP000773326 ISSN: 0016-2841 das ganze Dokument

## Beschreibung

Die Erfindung betrifft eine Vorrichtung mit einer industriellen Steuereinheit, einem industriellen Bedienpanel und einer Kommunikationsanbindung.

Industrielle Bedienpanels weisen in der Regel frontseitig neben einem als Anzeigeeinheit dienenden Flachdisplay mehrere Funktionseinheiten auf. Zu diesen gehören insbesondere eine Bedientastatur, die in Folientasten- oder Kurzhubtastenausführung realisiert sein kann, eine Touch-Screen- Eingabeeinheit zu einer anzeigegesteuerten Eingabe von Bedienbefehlen, eine Maus oder eine Pointer-Vorrichtung als Mausersatz, beispielsweise in Form eines Touch-Pad's, einer Rollkugel oder eines Piezo-Pad's, Status-Anzeigen, die als LED's ausgeführt sein können, und Tastenanzeigen, die dem Benutzer beispielsweise Informationen über aktuell erlaubte und unerlaubte Bedienungen geben. Weiterhin können Funktionseinheiten auch Kommunikationsschnittstellen zum Anschluss weiterer Bedien- und Ausgabegeräte, wie beispielsweise Barcodeleser, Drucker und einer Bedientastatur, und zum temporären Anschluß von Massenspeichergeräten wie CD-ROM-Laufwerken, CD-ROM-Brennern, LS120-Laufwerken und ZIP-Laufwerken sein.

Die Funktionseinheiten eines Bedienpanels werden über jeweils eigene Kommunikationsanbindungen über eine entsprechende Anzahl von Leitungen mit einer industriellen Steuereinheit verbunden. Diese dient zur Steuerung eines technischen Prozesses, z.B. einer industriellen Fertigungseinrichtung, und kann z.B. in Form einer speicherprogrammierbaren Steuerung oder eines Industrie-PC's ausgeführt sein. Die Verbindung geschieht bislang unter Verwendung unterschiedlicher Protokolle und unterschiedlicher Interfaces auf der Seite der industriellen Steuereinheit, wie beispielsweise COM1, COM2, LPT, PS2-Mouse, PS2-Keyboard, ein FD-Interface und/oder ein ATAPI-CDROM-Interface, und teilweise nicht standardisierter proprietärer Sonderlösungen. Hierdurch treten aber Nachteile auf, welche z.B. in deutlich reduzierten zulässigen Leitungslängen und eingeschränkter Industrietauglichkeit liegen, beispielsweise einer geringen Störfestigkeit der Verbindungsleitungen aufgrund vorliegender physikalischer Übertragungseigenschaften.

Aus der Veröffentlichung von Bassak G., USB eases data aquisition, aus "Test and Measurement World" vol. 18, Nr. 6 und der Veröffentlichung von Rowe M., "USB proves ready for T&M tasks" sind Grundlagen zur Datenübertragung mit Hilfe von USB Schnittstellen bekannt. In der US 5,675,813 wird ein System und ein Verfahren zur Energieübertragung über ein USB Bussystem zu einem Computer beschrieben.

Demgegenüber liegt der Erfindung die Aufgabe zugrunde, eine Vorrichtung aus einer industriellen Steuereinheit, einem industriellen Bedienpanel und einer Kommunikationsverbindung anzugeben, die die vorstehend beschriebenen Nachteile nicht aufweist. Ferner soll ein industrielles Bedienpanel angegeben werden, welches die vorbeschriebenen Nachteile nicht aufweist.

Diese Aufgabe wird mit einer Vorrichtung dem Anspruch 1 und einem industriellen Bedienpanel gemäß dem Anspruch 10 gelöst. Vorteilhafte Ausgestaltungen und Weiterbildungen der Erfindung sind in den abhängigen Patentansprüchen angegeben.

Die Vorteile der Erfindung bestehen insbesondere darin, daß das Bedienpanel über eine einzige Kommunikationsanbindung mit der industriellen Steuereinheit verbunden sein kann. Bei letzterer kann es sich beispielsweise um einen Office-PC, einen Industrie-PC oder einen Embedded-Computer handeln. Da die zulässige Leitungslänge dieser Kommunikationsanbindung im Vergleich zu bekannten Verbindungen zwischen industriellen Steuereinheiten und industriellen Bedienungspanels wesentlich vergrößert ist, wird durch die beanspruchte Vorrichtung gleichzeitig die Voraussetzung dafür geschaffen, das Bedienpanel räumlich von der industriellen Steuereinheit getrennt zu montieren und - neben einer Flachdisplay-Leitung und der Spannungsversorgung - über eine einzige, preiswerte Zweidraht-Verbindung an die industriellen Steuereinheit anzuschließen. Mittels dieser Lösung kann damit bei Bedarf begrenzten Einbaumaßen oder besonderen Umweltbedingungen Rechnung getragen werden.

Weiterhin ist über die bei der beanspruchten Verbindung verwendete Hub-Funktionalität ein gleichzeitiger Anschluß mehrere Bedienpanels an eine einzige industriellen Steuereinheit mittels einer einzigen Verbindungsleitung möglich. Dabei ist eine eindeutige Identifizierung der jeweiligen Bedienkomponente innerhalb des Gesamtsystems sichergestellt.

Weitere vorteilhafte Eigenschaften der Erfindung ergeben sich aus deren beispielhafter Erläuterung anhand der Figuren. Es zeigt
- FIG 1: eine Vorrichtung mit einer industriellen Steuerein- heit, einem industriellen Bedienpanel, und einer Kom- munikationsanbindung gemäß der Erfindung, und
- FIG 2: eine Vorrichtung mit einer industriellen Steuerein- heit und einem industriellen Bedienpanel gemäß einer Weiterbildung der Erfindung.

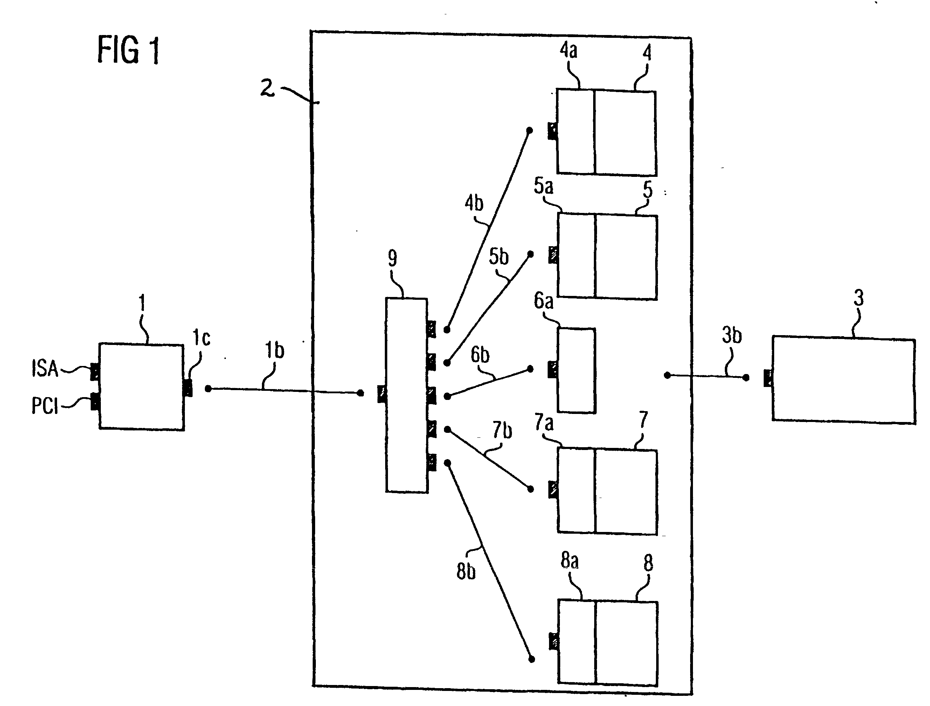

Die Figur 1 zeigt eine Vorrichtung mit einer industriellen Steuereinheit 1 und einem industriellen Bedienpanel 2. Das Bedienpanel 2 weist mehrere Funktionseinheiten 4, 5, 7, 8 auf. Mit der Bezugsziffer 4 ist dabei beispielhaft eine Maus, mit der Bezugsziffer 5 beispielhaft eine Touch-Screen-Eingabeeinheit, mit der Bezugsziffer 7 beispielhaft Leuchtdioden zur Statusanzeige und mit der Bezugsziffer 8 beispielhaft eine Eingabetastatur bezeichnet. Jeder dieser Funktionseinheiten ist ein eigener USB-Controller 4a, 5a, 7a, 8a zugeordnet, mittels dessen eine Umsetzung der innerhalb der jeweiligen Funktionseinheit vorliegenden Daten in das USB-Format und umgekehrt, erfolgt. Beim USB-Format handelt es sich um ein mittlerweile im Personal-Computer-Bereich standardisiertes Datenformat, welches zu einer seriellen Datenübertragung auf einem universellen seriellen Bus (USB) dient.

Die USB-Controller 4a, 5a, 7a, 8a sind jeweils mit einem in das Bedienpanel 2 integrierten USB-Hub 9 verbunden, der die ihm von den Funktionseinheiten zugeführten Daten zusammen mit jeweils zugehörigen Adressinformationen an eine einzige Kommunikationsanbindung weitergibt. Bei dieser Kommunikationsanbindung handelt es sich vorteilhaft um eine USB-Leitung 1b, welche an eine USB-Schnittstelle 1c der industriellen Steuereinheit 1 angeschlossen ist.

Weiterhin weist das Bedienpanel 2 auch eine USB-Frontschnittstelle 6a auf, die mit einem externen weiteren Bedien- und/oder Anzeigegerät 3 oder einem externen Massenspeichergerät verbunden ist. Bei diesem externen Gerät kann es sich um einen Drucker, eine externe Tastatur, eine externe Maus, einen externen Barcodeleser, eine PC-PC-Kopplung, ein CDROM-Gerät, einen CD-Brenner, ein LS120-Floppy-Disk-Laufwerk oder ein IOMEGA-ZIP-Laufwerk handeln.

Folglich sind gemäß der vorliegenden Erfindung die im Bedienpanel 2 befindlichen Funktionseinheiten jeweils über einen eigenen USB-Controller mit einem integrierten USB-Hub 9 verbunden, welcher wiederum über eine einzige USB-Leitung 1b an die industrielle Steuereinheit 1 angeschlossen ist. Die Vorteile einer derartigen Vorrichtung bestehen in der einfachen und preiswerten Kommunikationsanbindung über nur eine Leitung 1b an die industrielle Steuereinheit 1. Dort kann eine standardisierte USB-Schnittstelle verwendet werden. Dies bedeutet, daß die am Markt verfügbaren Treiber der Microsoft-Windows- Betriebssysteme Anwendung finden können. Ferner können bei der beanspruchten Vorrichtung auch weitere externe Bedien-, Ausgabe- und Massenspeichergeräte über das Bedienpanel 2 an die industrielle Steuereinheit 1 angeschlossen werden. Da die zulässige Leitungslänge der USB-Leitung 1b größer ist als 5 Meter, kann das Bedienpanel 2 auch räumlich entfernt von der industriellen Steuereinheit 1 montiert werden.

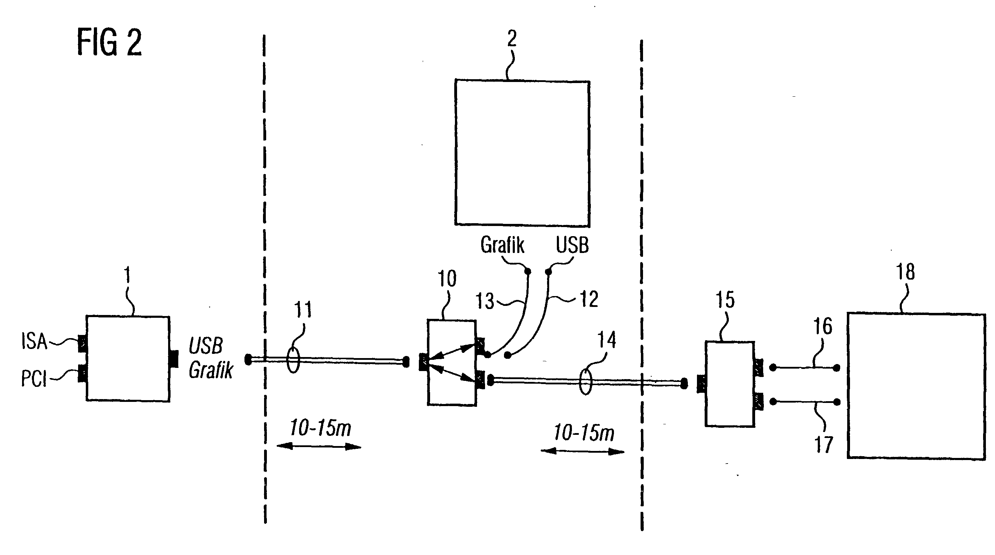

Die Figur 2 zeigt eine Vorrichtung zur Verbindung einer industriellen Steuereinheit 1 mit einem industriellen Bedienpanel 2 gemäß einer Weiterbildung der Erfindung.

Gemäß dieser Weiterbildung ist dem Bedienpanel 2 ein weiterer USB-Hub 10 zugeordnet, der dem Bedienpanel 2 räumlich beigestellt oder auch in dieses integriert sein kann. Dieser weitere USB-Hub 10 ist über eine erste USB-Leitung 12 mit den Funktionseinheiten des Bedienpanels 2 verbunden. Weiterhin werden über eine Leitung 13 Graphikdaten zwischen dem Bedienpanel 2 und dem USB-Hub 10 übertragen.

Der weitere USB-Hub 10 ist ferner über ein Kabel 14 mit einem externen Empfänger 15 verbunden, wobei das Kabel 14 eine USB-Leitung und eine Graphikleitung aufweist. Der Empfänger 15 ist mit einem weiteren Bedienpanel 18 über eine USB-Leitung 16 und eine Graphikleitung 17 verbunden. Die Bedienpanels 2 und 18 sind ebenso aufgebaut wie das oben im Zusammenhang mit der Figur 1 beschriebene Bedienpanel 2.

Der weitere USB-Hub 10 ist über ein Kabel 11 mit der industriellen Steuereinheit 1 verbunden, wobei das Kabel 11 eine USB-Leitung und eine Graphikleitung aufweist.

Die Länge der Kabel 11 und 14 kann dabei jeweils im Bereich von 10 m bis 15 m liegen. Folglich sind bei diesem Ausführungsbeispiel zwei an getrennten Orten installierte Bedienpanels über USB-Leitungen mit einer ortsgetrennt von den Bedienpanels angeordneten industriellen Steuereinheit 1 verbunden. Dabei ist lediglich ein einziges, zu der industriellen Steuereinheit 1 führendes Kabel notwendig. Zur Aufteilung der den verschiedenen Bedienpanels zuzuführenden Daten und zur Zusammenfassung der von den Bedienpanels kommenden Daten wird von einem USB-Hub Gebrauch gemacht, der bei bzw. in einem der Bedienpanels angeordnet ist.

## Patentansprüche

1. Vorrichtung mit einer industriellen Steuereinheit (1), einem industriellen Bedienpanel (2) und einer Kommunikationsanbindung (1b), wobei das industrielle Bedienpanel (2) aufweist
- Funktionseinheiten (4, 5, 7, 8), die jeweils mit einem USB-Controller (4a, 5a, 7a, 8a) ausgestattet sind, und
- einen integrierten USB-Hub (9), worüber
- die USB-Controller (4a, 5a, 7a, 8a) der Funktionseinheiten (4, 5, 7, 8) verbunden sind, und
- das industrielle Bedienpanel (2) mit der Kommunikationsanbindung (1b) zur industriellen Steuereinheit (1) verbunden ist.

2. Vorrichtung nach Anspruch 1, **dadurch gekennzeichnet, daß**
- die industrielle Steuereinheit (1) eine USB-Schnittstelle aufweist, und
- die Kommunikationsanbindung (1b) eine USB-Leitung ist, die an die USB-Schnittstelle der industriellen Steuereinheit (1) angeschlossen ist.

3. Vorrichtung nach Anspruch 1 oder 2, **dadurch gekennzeichnet, dass** die Funktionseinheiten (4, 5, 7, 8) Eingabe- und Ausgabekomponenten sind.

4. Vorrichtung nach Anspruch 3, **dadurch gekennzeichnet, dass** die Funktionseinheiten (4, 5, 7, 8) eine Bedientastatur, eine Touch-Screen-Eingabeeinheit, eine Statusanzeige, eine Tastenanzeige, ein Touch-Pad, eine Rollkugel und/oder ein Piezo-Pad enthalten.

5. Vorrichtung nach einem der vorhergehenden Ansprüche, **dadurch gekennzeichnet, dass** die Funktionseinheiten (4, 5, 7, 8) eine Kommunikationsschnittstelle (6a) zum Anschluß weiterer Bedien- und Ausgabegeräte und/oder zum temporären Anschluß von Massenspeicher-Geräten umfassen.

6. Vorrichtung nach einem der vorhergehenden Ansprüche, **dadurch gekennzeichnet , dass** die Leitungslänge der Kommunikationsanbindung (1b) größer als 5 Meter ist.

7. Vorrichtung nach einem der vorhergehenden Ansprüche, **dadurch gekennzeichnet, dass** der USB-Hub (9) mit der industriellen Steuereinheit (1) über eine Zweidrahtverbindung verbunden ist.

8. Vorrichtung nach einem der vorhergehenden Ansprüche, **dadurch gekennzeichnet, dass** dem Bedienpanel (2) ein weiterer USB-Hub (10) zugeordnet ist, der über eine erste USB-Leitung (12) mit den Funktionseinheiten des Bedienpanels, über eine zweite USB-Leitung mit den Funktionseinheiten mindestens eines weiteren Bedienpanels (18) und über eine dritte USB-Leitung mit der industriellen Steuereinheit (1) verbunden ist.

9. Vorrichtung nach Anspruch 8, **dadurch gekennzeichnet, dass** der weitere USB-Hub (10) dem Bedienpanel (2) zugeordnet oder in dieses integriert ist.

10. Industrielles Bedienpanel (2), mit
- Funktionseinheiten (4, 5, 7, 8), die jeweils mit einem USB-Controller (4a, 5a, 7a, 8a) ausgestattet sind, und
- einem integrierten USB-Hub (9), worüber
- die USB-Controller (4a, 5a, 7a, 8a) der Funktionseinheiten (4, 5, 7, 8) verbunden sind, und
- das industrielle Bedienpanel (2) mit einer Kommunikationsanbindung (1b) verbindbar ist.

11. Industrielles Bedienpanel (2) nach Anspruch 10, **dadurch gekennzeichnet, dass** die Funktionseinheiten (4, 5, 7, 8) Eingabe- und Ausgabekomponenten sind.

12. Industrielles Bedienpanel (2) nach Anspruch 11, **dadurch gekennzeichnet, dass** die Funktionseinheiten (4, 5, 7, 8) eine Bedientastatur, eine Touch-Screen- Eingabeeinheit, eine Statusanzeige, eine Tastenanzeige, ein Touch-Pad, eine Rollkugel und/oder ein Piezo-Pad enthalten.

13. Industrielles Bedienpanel (2) nach einem der Ansprüche 10 bis 12, **dadurch gekennzeichnet, dass** die Funktionseinheiten (4, 5, 7, 8) eine Kommunikationsschnittstelle (6a) zum Anschluß weiterer Bedien- und Ausgabegeräte und/oder zum temporären Anschluß von Massenspeicher-Geräten umfassen.

## Claims

1. Device comprising an industrial control unit (1), an industrial control panel (2) and a communication link (1b), wherein said industrial control panel (2) comprises
- functional units (4, 5, 7, 8), each of which is equipped with a USB controller (4a, 5a, 7a, 8a), and
- an integrated USB hub (9) via which
- the USB controllers (4a, 5a, 7a, 8a) are connected to the functional units (4, 5, 7, 8) and
- said industrial control panel (2) is connected to said industrial control unit (1) by means of said communication link (1b).

2. Device according to claim 1, **characterised in that**
- said industrial control unit (1) comprises a USB interface and
- said communication link (1b) is a USB line that is connected to the USB interface of said industrial control unit (1).

3. Device according to claim 1 or 2, **characterised in that** the functional units (4, 5, 7, 8) are input and output components.

4. Device according to claim 3, **characterised in that** the functional units (4,5,7,8) include an operator keyboard, a touchscreen input unit, a status display, a key display, a touch pad, a roller ball and/or a piezo pad.

5. Device according to one of the preceding claims,
**characterised in that** the functional units (4, 5, 7, 8) comprise a communication interface (6a) to enable the connection of further control and output devices and/or to enable the temporary connection of mass storage devices.

6. Device according to one of the preceding claims,
**characterised in that** the line length of said communication link (1b) is greater than 5 metres.

7. Device according to one of the preceding claims,
**characterised in that** the USB hub (9) is connected to said industrial control unit (1) via a two-wire connection.

8. Device according to one of the preceding claims,
**characterised in that** a further USB hub (10) is assigned to said control panel (2), said further USB hub (10) being connected to the functional units of said control panel via a first USB line (12), being connected to the functional units of at least one further control panel (18) via a second USB line, and being connected to said industrial control unit (1) via a third USB line.

9. Device according to claim 8, **characterised in that** said further USB hub (10) is assigned to said control panel (2) or is physically integrated therein.

10. Industrial control panel (2) comprising
- functional units (4, 5, 7, 8), each of which is equipped with a USB controller (4a, 5a, 7a, 8a), and
- an integrated USB hub (9) via which
- the USB controllers (4a, 5a, 7a, 8a) are connected to the functional units (4, 5, 7, 8) and
- said industrial control panel (2) can be connected by means of a communication link (1b).

11. Industrial control panel (2) according to claim 10,
**characterised in that** said functional units (4, 5, 7, 8) are input and output components.

12. Industrial control panel (2) according to claim 11,
**characterised in that** said functional units (4, 5, 7, 8) include an operator keyboard, a touchscreen input unit, a status display, a key display, a touch pad, a roller ball and/or a piezo pad.

13. Industrial control panel (2) according to one of the claims 10 to 12, **characterised in that** said functional units (4, 5, 7, 8) comprise a communication interface (6a) to enable the connection of further control and output devices and/or to enable the temporary connection of mass storage devices.

## Revendications

1. Dispositif comportant une unité de commande industrielle (1), un panneau de commande industriel (2) et une connexion de communication (1b), le panneau de commande industriel (2) comportant :
- des unités fonctionnelles (4, 5, 7, 8), qui sont équipées chacune d'un contrôleur USB (4a, 5a, 7a, 8a), et
- un Hub USB intégré (9), par l'intermédiaire duquel
- les contrôleurs USB (4a, 5a, 7a, 8a) des unités fonctionnelles (4, 5, 7, 8) sont reliés, et
- le panneau de commande industriel (2) est relié à la connexion de communication (1b) vers l'unité de commande industrielle (1).

2. Dispositif selon la revendication 1, **caractérisé par le fait que**
- l'unité de commande industrielle (1) comporte une interface USB, et
- la connexion de communication (1b) est une ligne USB qui est raccordée à l'interface USB de l'unité de commande industrielle (1).

3. Dispositif selon la revendication 1 ou 2, **caractérisé par le fait que** les unités fonctionnelles (4, 5, 7, 8) sont des composants d'entrée et de sortie.

4. Dispositif selon la revendication 3, **caractérisé par le fait que** les unités fonctionnelles (4, 5, 7, 8) contiennent un clavier de commande, une unité d'entrée à écran tactile, un indicateur d'états, un indicateur de touches, un pavé tactile, une boule roulante et/ou un pavé piézo-électrique.

5. Dispositif selon l'une des revendications précédentes, **caractérisé par le fait que** les unités fonctionnelles (4, 5, 7, 8) comprennent une interface de communication (6a) pour le raccordement d'autres appareils de commande et de sortie et/ou pour le raccordement temporaire d'appareils de mémoire de grande capacité.

6. Dispositif selon l'une des revendications précédentes, **caractérisé par le fait que** la longueur de ligne de la connexion de communication (1b) est supérieure à 5 mètres.

7. Dispositif selon l'une des revendications précédentes, **caractérisé par le fait que** le Hub USB (9) est relié à l'unité de commande industrielle (1) par l'intermédiaire d'une liaison bifilaire.

8. Dispositif selon l'une des revendications précédentes, **caractérisé par le fait qu'**il est associé au panneau de commande (2) un autre Hub USB (10) qui est relié par l'intermédiaire d'une première ligne USB (12) aux unités fonctionnelles du panneau de commande, par l'intermédiaire d'une deuxième ligne USB aux unités fonctionnelles d'au moins un autre panneau de commande (18) et par l'intermédiaire d'une troisième ligne USB à l'unité de commande industrielle (1).

9. Dispositif selon la revendication 8, **caractérisé par le fait que** l'autre Hub USB (10) est associé au panneau de commande (2) ou est intégré dans celui-ci.

10. Panneau de commande industriel (2), comportant :
- des unités fonctionnelles (4, 5, 7, 8), qui sont équipées chacune d'un contrôleur USB (4a, 5a, 7a, 8a), et
- un Hub USB intégré (9), par l'intermédiaire duquel
- les contrôleurs USB (4a, 5a, 7a, 8a) des unités fonctionnelles (4, 5, 7, 8) sont reliés, et
- le panneau de commande industriel (2) peut être relié à une connexion de communication (1b).

11. Panneau de commande industriel (2) selon la revendication 10, **caractérisé par le fait que** les unités fonctionnelles (4, 5, 7, 8) sont des composants d'entrée et de sortie.

12. Panneau de commande industriel (2) selon la revendication 11, **caractérisé par le fait que** les unités fonctionnelles (4, 5, 7, 8) contiennent un clavier de commande, une unité d'entrée à écran tactile, un indicateur d'états, un indicateur de touches, un pavé tactile, une boule roulante et/ou un pavé piézo-électrique.

13. Panneau de commande industriel (2) selon l'une des revendications 10 à 12, **caractérisé par le fait que** les unités fonctionnelles (4, 5, 7, 8) comprennent une interface de communication (6a) pour le raccordement d'autres appareils de commande et de sortie et/ou pour le raccordement temporaire d'appareils de mémoire de grande capacité.
